# EUROPÄISCHE PATENTSCHRIFT

(11) **EP 3 645 955 B1**
(45) Veröffentlichungstag und Bekanntmachung des Hinweises auf die Patenterteilung: **30.03.2022**
(21) Anmeldenummer: 18758554.2
(22) Anmeldetag: 08.08.2018
(51) Int. Cl.: F28D 20/00, B65D 81/24, B65D 88/34, F17C 3/06

(54) **PUFFERSPEICHER**
BUFFER TANK
RÉSERVOIR D'ACCUMULATION

(30) Priorität: 18.08.2017 DE 102017118952
(43) Veröffentlichungstag der Anmeldung: 06.05.2020
(73) Patentinhaber: XL Beteiligungen GmbH & Co. KG, 73497 Tannhausen (DE)
(72) Erfinder: LIPP, Manuel, 73479 Ellwangen (DE)
(74) Vertreter: Lorenz, Markus
(86) Internationale Anmeldenummer: PCT/EP2018/071559
(87) Internationale Veröffentlichungsnummer: WO 2019/034499

(56) Entgegenhaltungen:
- EP-A1- 0 043 888
- WO-A1-00/46128
- WO-A1-2011/138270
- DE-T2- 69 505 272
- JP-A- 2000 304 480
- US-A- 4 230 138

## Beschreibung

Die Erfindung betrifft einen Pufferspeicher, insbesondere zur Wärmespeicherung.

Bei einem Pufferspeicher gemäß der Erfindung kann es sich insbesondere um einen Pufferspeicher handeln, der im "drucklosen Bereich" bzw. unter Atmosphärendruck mit einer Betriebstemperatur von bis zu 95 Grad Celsius arbeitet und insbesondere für den Betrieb mit Heizungswasser als Speicherfluid ausgelegt ist. Der Pufferspeicher kann insbesondere Teil einer Heizungsanlage sein.

Der Pufferspeicher gemäß der Erfindung kann insbesondere dazu dienen, um Wärme von Biogasanlagen, Biomasseheizkraftwerken, Solaranlagen oder anderen Wärmequellen zu speichern. Selbstverständlich kann auch überschüssige Wärme von konventionellen Kraftwerken oder Verbrennungsanlagen zur Erwärmung des Speicherfluids insbesondere des Heizungswassers verwendet werden.

In der Regel weisen Pufferspeicher dieser Art ein Behältergehäuse auf, das mit großen Mengen eines Speicherfluides, beispielsweise mit Wasser, insbesondere mit demineralisiertem Wasser, aufbereitet nach dem Stand der Technik für Heizungsanlagen mit geringem Sauerstoffgehalt, befüllt ist. Das Wasser dient dabei als Speichermedium zur Zwischenspeicherung von Wärme, die beispielsweise von Biogasanlagen, Biomasseheizkraftwerken, Solaranlagen oder anderen Wärmequellen erzeugt wird. Derartige Pufferspeicher weisen in der Regel ein Nutzvolumen von 40 bis 10.000 Kubikmeter auf. Pufferspeicher gemäß dem Oberbegriff von Anspruch 1 sind aus dem Dokument WO 00/46128 A1 bekannt.

Gemäß der vorliegenden Erfindung wird unter einem Pufferspeicher insbesondere ein Wärmespeicher verstanden, der nicht im Druckbereich arbeitet, d.h. der Pufferspeicher ist drucklos, arbeitet bei Umgebungsdruck und unterscheidet sich hier von sogenannten Druckspeichern.

Aus der Praxis ist bekannt, dass bei Pufferspeichern dieser Art insbesondere mit einem hohen Nutzvolumen infolge von Temperaturschwankungen im Bereich von 20 bis 95 Grad Celsius sehr große Schwankungen des Volumens des Speicherfluids im Inneren des Behältergehäuses auftreten.

Um zu vermeiden, dass in dem Behältergehäuse ein Unterdruck entsteht, durch den unzulässig große Kräfte auf die Hülle des Behältergehäuses wirken, wird in der Regel das nicht belegte Volumen in dem Behältergehäuse durch ein Gas belegt. Um weiter zu vermeiden, dass infolge einer Wärmeausdehnung ein Überdruck innerhalb des Behältergehäuses entsteht, wird die Volumenänderung des Speicherfluids aufgrund von Wärmeausdehnung dadurch ermöglicht, dass das zusätzliche Gas bei Volumenzunahme des Speichermediums an die Umgebung abgeführt wird. Bei einer Abnahme der Temperatur des Speicherfluids muss dann erneut Gas zugeführt werden, um wiederum einen Unterdruck in dem Behältergehäuse zu vermeiden.

Weiterhin ist auch bekannt, dass Oxidationsprozesse der verwendeten metallischen Materialien der Komponenten eines Pufferspeichersystems und der gegebenenfalls angeschlossenen Heizungsanlage, insbesondere der Heizleitungen und der Heizkörper, nach Möglichkeit zu vermeiden sind. Herkömmliches Wasser enthält freien Sauerstoff, der sich mit metallischen Materialien verbinden kann, woraus eine Oxidation resultiert. Bei einem geschlossenen System wird der Oxidationsprozess beendet, wenn sich der gesamte freie Sauerstoff mit den metallischen Materialien verbunden hat. Um Oxidationsprozesse möglichst weitgehend zu vermeiden, wird das Speicherfluid oft durch speziell aufbereitetes Wasser gebildet. Zudem muss zur Vermeidung von Korrosion der Kontakt im Falle eines Speicherfluids, wie Wasser, mit beispielsweise Luftsauerstoff aus der Umgebung verhindert werden. Aus der Praxis ist es daher bekannt, zum Beispiel Stickstoff als Gas zur Belegung des nicht von dem Speicherfluid belegten Volumens zu verwenden. In der Konsequenz bedeutet die Beschaffung und Bereitstellung von Stickstoff im Falle von Volumenschwankungen des Speicherfluids einen enorm hohen Aufwand und damit verbundene Mehrkosten.

Wird auf die Verwendung eines solchen die Oxidation vermeidenden Gases (inerten Gases), wie Stickstoff, verzichtet, kann Sauerstoff auch bei kleineren Konzentrationen zu Oxidationsprozessen führen, wobei Anlagen und Teile im Heizsystem beschädigt werden und den Betrieb oder die Anlage im Ganzen beeinträchtigen oder stoppen können.

Im Unterschied hierzu fallen jedoch hohe Betriebskosten an, wenn eine Gasüberdeckung mit einem inerten Gas, wie Stickstoff, erforderlich ist. So ist es beispielsweise bekannt, zum Volumenausgleich flüssigen Stickstoff einzusetzen, der auf das Speicherfluid geleitet wird. Diese Einrichtungen sind wiederum sehr aufwändig in Errichtung und Betrieb.

Demgemäß besteht eine Aufgabe der vorliegenden Erfindung darin, eine besonders einfache und kostengünstige Lösung bereitzustellen, die den vorgenannten Problemen zumindest teilweise Rechnung trägt.

Demgemäß schlägt die vorliegende Erfindung einen Pufferspeicher mit den Merkmalen des Anspruchs 1 vor.

Ein erfindungsgemäßer Pufferspeicher umfasst ein geschlossenes Behältergehäuse zur Aufnahme eines Speicherfluids mit wenigstens einer Einlassöffnung zum Befüllen des Behältergehäuses mit dem Speicherfluid sowie mit wenigstens einer Ausgleichsöffnung, die das Behältergehäuse fluidisch mit der Umgebung verbindet und einen fluidischen Ausgleich mit der Umgebung ermöglicht. Über die Ausgleichsöffnung kann somit beispielsweise Umgebungsluft oder auch ein inertes Gas, zum Beispiel Stickstoff in das Innere des Behältergehäuses gelangen und bei einer deutlichen Volumenzunahme des Speicherfluids auch wieder nach außen oder in einen Ausgleichsbehälter oder ein entsprechendes System, zum Beispiel ein Druckausgleichssystem, bei dem insbesondere Stickstoff verwendet wird, abgegeben werden. Um jedoch insbesondere dann, wenn Wasser als Speicherfluid genutzt wird, unerwünschte Oxidationsprozesse zu vermeiden, ist zusätzlich eine gasdichte Abdeckung im Inneren des Behältergehäuses vorgesehen, die das Speicherfluid zuverlässig vor der Vermischung mit anderen Fluiden, beispielsweise mit der Umgebungsluft, zu schützen vermag. Die gasdichte Abdeckung ist als Folie ausgebildet, die wenigstens teilweise auf dem Speicherfluid, insbesondere dem Wasser, schwimmt.

Insofern im Rahmen der Erfindung der Begriff "gasdichte Abdeckung" verwendet wird, ist hierunter eine gasdichte Abdichtung und/oder eine weitestgehend gasdichte Abdichtung zu verstehen.

Die gasdichte Abdeckung trennt somit das Innere des Behältergehäuses in einen Speicherraum und einen Ausgleichsraum, wobei der Ausgleichsraum bzw. Luftraum fluidisch mit der Umgebung des Behältergehäuses verbunden ist, so dass insbesondere Umgebungsluft in den Luftraum eingesaugt bzw. aus diesem nach außen abgegeben werden kann.

Im Rahmen der Erfindung ist unter dem Begriff "Umgebung" insbesondere eine Umgebung des Behältergehäuses, insbesondere die Außenatmosphäre bzw. der Außenbereich, in der sich Umgebungsluft befindet, zu verstehen. Der Begriff "Umgebung" umfasst jedoch auch einen Ausgleichsbehälter und/oder ein Ausgleichssystem, insbesondere ein Druckausgleichssystem, bei dem als Fluid Stickstoff oder ein anderes inertes Gas verwendet wird. Es wird eine zusätzliche Sicherung gegen Oxidation erreicht, wenn in dem Ausgleichsraum bzw. dem Luftraum anstelle der Umgebungsluft Stickstoff oder ein anderes geeignetes Gas eingebracht ist.

Dabei kann weiter vorgesehen sein, dass die gasdichte Abdeckung zumindest abschnittsweise flexibel ausgebildet ist. Hierdurch kann eine relative Bewegung der gasdichten Abdeckung relativ zu dem Behältergehäuse erleichtert werden.

Weiterhin kann vorgesehen sein, dass die gasdichte Abdeckung zumindest in einem Temperaturbereich von 0 bis 100 °C temperaturbeständig ist. Insbesondere kann die Temperaturbeständigkeit in einem Temperaturbereich von 20 °C bis 95 °C liegen.

Weiterhin kann vorgesehen sein, dass die gasdichte Abdeckung im Bereich ihres Außenumfangs fest mit dem Behältergehäuse verbunden ist, beispielsweise geklemmt, geklebt, verschraubt oder, wie nachfolgend noch näher dargestellt, in eine Wasserrinne eingespannt ist. Bei einer denkbaren Ausführungsform, die unabhängig von der spezifischen Struktur der gasdichten Abdeckung und deren Befestigung ist, kann vorgesehen sein, dass die gasdichte Abdeckung zumindest abschnittsweise doppelwandig und/oder mehrlagig ausgebildet ist.

Alternativ oder zusätzlich kann die gasdichte Abdeckung zumindest abschnittsweise eine geringere Dichte als das Speicherfluid aufweisen.

Im Falle einer zumindest abschnittsweise doppelwandig ausgebildeten gasdichten Abdeckung kann die geringere Dichte durch das Einfüllen eines Mediums, beispielsweise von Luft oder dergleichen, in den Bereich zwischen den beiden Wänden der gasdichten Abdeckung erreicht werden. So kann zumindest der doppelwandig ausgebildete Abschnitt der gasdichten Abdeckung auf dem Speicherfluid aufliegen, das heißt quasi auf diesem aufschwimmen.

Alternativ oder zusätzlich kann selbstverständlich auch bei einer einwandigen Ausbildung der gasdichten Abdeckung das Material derart gewählt werden, dass dieses eine geringere Dichte als das Speicherfluid aufweist, wodurch der beschriebene Effekte des Aufliegens bzw. Aufschwimmens auf dem Speicherfluid erreicht werden kann.

Weiterhin kann das Behältergehäuse an seinem Innenumfang eine Befestigungsschiene, insbesondere eine Klemmschiene, zur gasdichten Befestigung der gasdichten Abdeckung aufweisen. Vorgesehen sein können auch Spannsysteme oder Zugfedern. Zur Befestigung der gasdichten Abdeckung sind vorzugsweise Halte-, Klemm- oder Spannsysteme bzw. -ringe, die geschlossen ringförmig an dem Innenumfang des Behältergehäuses umlaufen, vorgesehen. Des Weiteren kann auch eine Wasserrinne, wie nachfolgend dargestellt, zur Befestigung der gasdichten Abdeckung Verwendung finden.

Die gasdichte Abdeckung kann zumindest einen Kompensationsbereich aufweisen, der eine Volumenänderung des Speicherfluids auszugleichen vermag, indem sich die gasdichte Abdeckung in diesem Bereich auszudehnen oder zu kontrahieren vermag. Hierzu kann der Kompensationsbereich flexibel und/oder elastisch ausgebildet sein. So kann der Kompensationsbereich beispielsweise in der Art einer oder mehrerer Wülste gebildet sein, die in der Art eine Balgstruktur eine Ausdehnung bzw. Kontraktion ermöglichen. Auch ist eine Materialschürze oder ein Materialsack als Kompensationsbereich denkbar, die oder der sich im Falle einer Volumenausdehnung des Speicherfluids mit letzterem zu füllen vermag und umgekehrt dieses wieder zurückgeben kann, wenn sich das Speicherfluid erneut kontrahiert.

Die gasdichte Abdichtung kann auch einen Kompensationsbereich aufweisen, innerhalb dessen sich eine Volumenänderung des Speichervolumens dadurch ausgleichen lässt, dass sich die gasdichte Abdeckung zumindest im Kompensationsbereich durch das Speicherfluid anheben oder absenken lässt. Das heißt, die gasdichte Abdeckung kann innerhalb eines Kompensationsbereichs derart beweglich befestigt sein, dass eine definierte Volumenänderung des Speicherfluids im Behältergehäuse dadurch ausgeglichen werden kann, dass sich die gasdichte Abdeckung, dadurch dass diese auf dem Speichervolumen schwimmt, anheben oder absenken lässt.

Von Vorteil ist es, wenn die Folie derart in dem Behältergehäuse befestigt ist, dass die Folie zumindest im Kompensationsbereich einer Volumenänderung des Speicherfluids folgen kann, insbesondere auf dem Speicherfluid schwimmend anhebbar und absenkbar ist.

Dadurch, dass die Folie auf dem Speicherfluid schwimmt und entsprechend befestigt ist, wird die Folie bei einem Ansteigen des Speicherfluids angehoben und entsprechend wieder abgesenkt, wenn sich das Volumen des Speicherfluids verkleinert. Dadurch wird in einfacher Weise eine zuverlässige Abtrennung im Innenraum des Behältergehäuses geschaffen, wodurch das Behältergehäuse einerseits einen Speicherraum und andererseits einen Ausgleichsraum, insbesondere einen Luftraum aufweist.

Von Vorteil ist es, wenn der Kompensationsbereich derart gewählt wird, dass bei einer Befüllung des Behälters mit Speicherfluid mit einer Temperatur von 20 Grad Celsius die Sollfüllhöhe im Behältergehäuse ein unteres Ende (Mindestfüllhöhe) des Kompensationsbereichs definiert, während ein oberes Ende (Maximalfüllhöhe) des Kompensationsbereichs durch eine Füllstandshöhe des Speicherfluids im Behältergehäuse definiert ist, die sich ergibt, wenn das Speicherfluid auf eine Temperatur von 95 Grad Celsius aufgeheizt ist.

Die Sollfüllhöhe am unteren Ende, d. h. die Mindestfüllhöhe, kann auch durch eine Temperatur des Speicherfluids, insbesondere Wasser, von 10 Grad Celsius definiert sein. Diese Temperatur weist das Wasser typischerweise bei der Erstbefüllung des Pufferspeichers auf. Die Temperatur des Speicherfluids, die die Mindestfüllhöhe definiert, kann auch einen Bereich umfassen, der sich ergibt, wenn die Temperatur des Speicherfluids, insbesondere des Wassers, zwischen 10 Grad Celsius und 20 Grad Celsius liegt.

Insbesondere bei der vorzugsweise vorgesehenen Verwendung des Pufferspeichers für den Betrieb mit Heizungswasser lässt sich durch die vorgenannten Werte ein Kompensationsbereich, d.h. der Bereich innerhalb dessen die gasdichte Abdichtung, insbesondere die Folie eine Volumenänderung ausgleichen soll, definieren. Die vorgenannten Werte haben sich als besonders geeignet herausgestellt, selbstverständlich kann insbesondere zur Bestimmung des unteren Endes des Kompensationsbereiches auch eine Befüllung des Behälters mit Speicherfluid mit einer anderen Temperatur, insbesondere einer geringeren Temperatur, beispielsweise 5 bis 20 Grad Celsius, insbesondere 10 bis 20 Grad Celsius, weiter beispielsweise 15 Grad Celsius, vorzugsweise 10 Grad Celsius, vorgesehen sein.

Es kann vorgesehen sein, dass der erfindungsgemäße Pufferspeicher über ein Notablassventil verfügt, welches sich öffnet wenn das Speicherfluid eine bestimmte Temperatur überschreitet oder ein Druckanstieg über ein definiertes Maß hinaus erfolgt.

Von Vorteil ist es, wenn der Kompensationsbereich derart gewählt ist, dass Volumenänderungen des Speicherfluids bis zu 20 % des Speichervolumens des Pufferspeichers ausgleichbar sind.

Die erfindungsgemäße Lösung ermöglicht es insbesondere temperaturbedingte Schwankungen des Speichervolumens des Pufferspeichers auszugleichen. Zudem können gegebenenfalls auch noch Schwankungen im Heizungsnetz ausgeglichen werden, wenn der Pufferspeicher direkt mit selbigem verbunden ist. Auch hierfür eignet sich der vorgenannte Kompensationsbereich.

Von Vorteil ist es, wenn in einem Luftraum des Behältergehäuses oberhalb der gasdichten Abdeckung Stickstoff eingebracht bzw. einleitbar ist und/oder ein System vorgesehen ist, um Stickstoff einzuleiten und abzuleiten, insbesondere um einen Druckausgleich herzustellen.

Zur Erhöhung der Sicherheit kann in den Luftraum oberhalb der gasdichten Abdichtung, insbesondere statt der Umgebungsluft bzw. anstelle von Sauerstoff auch ein inertes Gas, insbesondere Stickstoff eingebracht werden. Dadurch wird besonders zuverlässig sichergestellt, dass kein Sauerstoff an das Speicherfluid, insbesondere ein Heizungswasser gelangt.

Von Vorteil ist es, wenn die gasdichte Abdeckung eine Folie aus Ethylen-Propylen-Dien-Terpolymer (EPDM) ist oder Ethylen-Propylen-Dien-Terpolymer (EPDM) aufweist.

Eine Ausbildung der Folie aus Ethylen-Propylen-Dien-Terpolymer oder zumindest eine teilweise Ausbildung aus diesem Material hat sich als besonders geeignet herausgestellt.

Von Vorteil ist es, wenn die Folie eine Stärke von 0,5 bis 5 mm, vorzugsweise 1 mm bis 4 mm, besonders bevorzugt 1,5 bis 3 mm und ganz besonders bevorzugt 2 mm +/- 0,2 mm, aufweist.

Von Vorteil ist es, wenn das Behältergehäuse an seinem Innenumfang eine Rinne zur Aufnahme einer Flüssigkeit, insbesondere Wasser, aufweist und die gasdichte Abdeckung in der Rinne befestigt, insbesondere eingespannt oder verschraubt oder eingeklemmt, ist.

Die Befestigung der gasdichten Abdeckung, insbesondere wenn diese als Folie ausgebildet ist, in einer Rinne, die mit einer Flüssigkeit, vorzugsweise mit Wasser gefüllt ist, hat sich als besonders geeignet herausgestellt, um sicherzustellen, dass kein Gas, insbesondere kein Sauerstoff in den Speicherraum des Behältergehäuses, in dem sich das Speicherfluid befindet, gelangen kann. Durch die Ausbildung einer derartigen Wasserrinne lässt sich die Sicherheit weiter erhöhen. Vorzugsweise läuft die Rinne an einer Innenwand des Behältergehäuses vollständig um. Zur Befestigung der Folie kann ein bekanntes System verwendet werden, insbesondere auch ein Spannsystem. Vorgesehen sein kann jedoch auch eine Verschraubung, eine Verklemmung, ein Verkleben, ein Verschweißen oder eine andere Maßnahme, um insbesondere die Folie in der Rinne zu fixieren.

Das Behältergehäuse des Pufferspeichers kann weiterhin im Bereich oberhalb der gasdichten Abdeckung einen Wartungszugang aufweisen, sowie optional an seinem Innenumfang wenigstens einen oberhalb und/oder unterhalb der gasdichten Abdeckung angeordneten Laufsteg aufweisen. Auf diese Weise kann im Falle einer Beschädigung der gasdichten Abdeckung eine Wartung erfolgen, ohne dass hierfür das gesamte Speicherfluid des Pufferspeichers ausgelassen werden muss. Der erfindungsgemäße Pufferspeicher kann über einen Wartungszugang, insbesondere eine Dachluke, verfügen, damit Wartungspersonal in das Innere des Pufferspeichers gelangen kann. Es kann insbesondere vorgesehen sein, dass die Wartung oder der Austausch der gasdichten Abdeckung, insbesondere wenn es sich hierbei um eine Folie handelt, über einen Wartungszugang, insbesondere eine Dachluke, erfolgt, die in einen Deckel bzw. ein Dach des Pufferspeichers integriert ist.

Von Vorteil ist es ferner, wenn der Pufferspeicher zudem über ein Mannloch verfügt, welches vorzugsweise im Behältergehäuse angeordnet ist, vorzugsweise derart, dass sich das Mannloch in einem unteren Bereich des Behältergehäuses befindet, so dass ein einfacher Zugang möglich ist.

Die erfindungsgemäße Abdeckung ermöglicht es, den Innenraum des Behältergehäuses in einen Speicherraum für das Speicherfluid, insbesondere Wasser, und einen hiervon gasdicht abgetrennten Ausgleichsraum zu unterteilen. Aufgrund der wenigstens abschnittsweise flexiblen Ausbildung der Abdeckung, insbesondere wenn diese eine folienartige Struktur aufweist, hebt sich die Abdeckung mit dem Speicherfluid, insbesondere Wasser, an oder senkt sich ab, wenn sich das Volumen des Speicherfluids ausdehnt bzw. reduziert.

Nachdem das Speicherfluid in einem Pufferspeicher unterschiedliche Temperaturen aufweisen kann, ist die Ausdehnung des Speicherfluids und somit auch der Speicherraum während des Betriebs des Pufferspeichers unterschiedlich groß.

Die erfindungsgemäße Abdeckung passt sich an den Raumbedarf des Speicherfluids an. Bei einer Ausdehnung bzw. Reduzierung des Volumens des Speicherfluids wird die Abdeckung entsprechend von dem Speicherfluid angehoben oder abgesenkt, wodurch sich auch das Volumen des Ausgleichsraums entsprechend ändert. Der Ausgleichsraum ist dabei über wenigstens eine Ausgleichsöffnung, wie bereits beschrieben, mit der Umgebung oder einem gesonderten Druckraum verbunden, so dass Gas, insbesondere Luft, aus dem Ausgleichsraum strömen oder wieder einströmen kann.

Anstelle von Luft kann auch Stickstoff oder ein anderes Gas in den Ausgleichsraum eingebracht sein, wobei es in diesem Fall von Vorteil ist, das Gas nicht in die Umgebung, sondern in einen Druckspeicher bzw. Druckraum auszulassen bzw. von dort zu entnehmen.

Die Abdeckung, insbesondere in einer Ausgestaltung als Folie, wird, wie bereits beschrieben, gasdicht mit einer Innenwand des Behältergehäuses verbunden, wozu verschiedene Befestigungsvarianten, unter anderem auch ein Klemmelement bzw. einen Folienhalter, z. B. eine Klemmschiene, eingesetzt werden können. Es kann dabei, wie bereits beschrieben, vorgesehen sein, dass die Folie oberhalb der Mindestfüllhöhe, beispielsweise 50 cm bis 2 m, vorzugsweise 1,5 m oberhalb der Mindestfüllhöhe, befestigt ist und in der Art eines nach oben offenen Sacks nach unten hängt. Die Folie wird dann, wenn das Speicherfluid bzw. der Wasserspiegel steigt, entsprechend angehoben bzw. verdrängt.

In einer alternativen Ausgestaltung ist es auch möglich, dass die Abdeckung bzw. die Folie im Bereich der Mindestfüllhöhe an der Innenwand des Behälters mit den bereits beschriebenen Maßnahmen befestigt ist. Die Abdeckung bzw. die Folie weist dabei eine Gestaltung auf, die es ermöglicht, dass die Folie nach oben angehoben bzw. verdrängt wird, wenn sich das Speicherfluid ausgedehnt bzw. sich der Wasserspiegel in dem Pufferspeicher anhebt.

Selbstverständlich ist es auch möglich, die Abdeckung bzw. die Folie in einer Höhe an der Innenwand des Behälters zu befestigen, die der Höhe entspricht, die sich in etwa der Mitte des Kompensationsbereichs, d. h. dem Bereich zwischen einer Mindestfüllhöhe und einer Maximalfüllhöhe, befindet.

Die Abdeckung bzw. die Folie weist vorzugsweise einen derartigen Materialüberschuss oder eine Gestaltung auf, die es ermöglicht, dass sich die Folie im gewünschten Maße durch eine Volumenänderung des Speicherfluids bzw. ein Anheben oder Absenken des Wasserpegels, entsprechend anheben oder absenken lässt, damit sich das Volumen des Speicherraums entsprechend anpasst.

In bekannter Weise weist der Pufferspeicher eine Einlassöffnung auf, um das Speicherfluid, insbesondere vor der ersten Inbetriebnahme einlaufen zu lassen. Hierzu kann ein grundsätzlich bekanntes Befüllsystem verwendet werden. Vorzugsweise ist das Befüllsystem im Bereich des unteren Endes des Behältergehäuses angeordnet und dient dazu, den Speicherraum bis zu einer Mindestfüllhöhe zu befüllen. Das einzubringende Speicherfluid, vorzugsweise Wasser, weist dabei zumeist eine Temperatur auf, die deutlich geringer ist als die Temperatur, die das Speichermedium im späteren Betrieb des Pufferspeichers hat. Insofern es sich bei dem Speicherfluid um Wasser handelt, wird dieses üblicherweise eine Temperatur von ca. 10 Grad Celsius während der Befüllung aufweisen.

Der erfindungsgemäße Pufferspeicher weist vorzugsweise einen Überlauf für die sogenannte Erstbefüllung auf. Das heißt, sobald die Mindestfüllhöhe erreicht ist, läuft bei der Befüllung des Pufferspeichers mit dem Speicherfluid, insbesondere Wasser, das Speicherfluid über den Überlauf für die Erstbefüllung ab. Eine Bedienperson erkennt somit, wenn der Pufferspeicher bis zur Mindestfüllhöhe befüllt ist. Der Befüllvorgang kann dann abgeschlossen werden. Hierzu kann dann auch vorgesehen sein, dass der Überlauf für die Erstbefüllung verschlossen wird, so dass, wenn sich das Speicherfluid beim Betrieb des Pufferspeichers ausdehnt, das Speicherfluid nicht über den Überlauf für die Erstbefüllung abläuft, sondern im Speicherraum verbleibt. Der Überlauf für die Erstbefüllung dient primär dazu sicherzustellen, dass der Speicherraum bei der Erstbefüllung mit dem Speicherfluid nur bis zur Mindestfüllhöhe und nicht darüber hinaus befüllt wird.

Erfindungsgemäß kann ferner vorgesehen sein, dass der Pufferspeicher einen Notüberlauf für die Maximalbefüllung (Maximalfüllhöhe) aufweist. Der Notüberlauf für die Maximalbefüllung soll sicherstellen, dass, wenn sich das Volumen des Speicherfluids über die Maximalfüllhöhe hinaus ausdehnt, Speicherfluid aus dem Pufferspeicher ablaufen kann. Der Notüberlauf für die Maximalfüllhöhe verfügt dabei vorzugsweise über ein Siphonsystem, vorzugsweise ein doppeltes Siphonsystem, so dass einerseits ein Eindringen von Luft vermieden wird, es andererseits jedoch möglich ist, wenn das Speicherfluid über die Maximalfüllhöhe gestiegen ist, Speicherfluid nach außen an die Umgebung abzugeben.

Vorzugsweise erstreckt sich der Notüberlauf für die Maximalfüllhöhe von einem oberen Bereich des Behälters zu einem unteren Bereich des Behälters, so dass überschüssiges Speicherfluid selbständig ablaufen kann. Dabei ist vorzugsweise sowohl am oberen als auch am unteren Ende des Überlaufs ein Siphon vorgesehen, um zuverlässig das Eindringen von Luft aus der Umgebung zu vermeiden.

Von Vorteil ist es, wenn der erfindungsgemäße Pufferspeicher über einen Notlufteinlass verfügt. Das Notlufteinlasssystem weist vorzugsweise ein Unterdruckventil auf, welches einen Lufteinlass in den Speicherraum, vorzugsweise in einen oberen Bereich des Speicherraums öffnet, wenn der Druck im Speicherraum über ein definiertes Niveau ansteigt. Üblicherweise wird der Pufferspeicher drucklos betrieben, d. h. der Speicherraum weist den Atmosphärendruck auf. Eine Druckänderung im Speicherraum kann sich jedoch ergeben, wenn ein Rohrbruch vorliegt oder wenn das Speicherfluid aus anderen Gründen versehentlich oder gegebenenfalls bewusst aus dem Speicherraum abgelassen wird. In diesem Fall bewegt sich die Abdeckung zunächst mit dem Speicherfluid nach unten. Wenn die Abdeckung jedoch das untere Ende des Kompensationsbereichs bzw. das Maximum ihrer Bewegungsfreiheit erreicht hat, kann sich die Abdeckung nicht mehr weiter absenken. Bei einem weiteren Ablassen des Speicherfluids würde sich somit der Druck im Speicherraum oberhalb des Speicherfluids absenken bzw. es könnte ein Vakuum entstehen, welches zu einer Beschädigung bzw. einem Reißen der Abdeckung, insbesondere der Folie führen könnte. Für diesen Fall ist vorgesehen, dass der Notlufteinlass öffnet und Luft in den Speicherraum einströmen kann, um den Druck auszugleichen.

Vorzugsweise ist der Notlufteinlass mit einem Siphonsystem kombiniert und/oder derart angeordnet, dass im regulären Betrieb keine Luft einströmen kann.

Vorzugsweise ist der Notlufteinlass mit dem Notüberlauf kombiniert und derart angeordnet, dass sich ein Zugang in den Behälterinnenraum üblicherweise unterhalb der Oberfläche des Speicherfluids, insbesondere des Wasserpegels befindet, so dass schon aus diesen Gründen keine Luft einströmen kann.

In grundsätzlich bekannter Weise kann der erfindungsgemäße Pufferspeicher über eine Auslassleitung und eine Einlassleitung verfügen, die insbesondere mit einer Heizungsanlage verbunden sind. In üblicher Weise ist die Auslassleitung in einem oberen Bereich des Pufferspeichers positioniert, wobei die Auslassleitung im Rahmen der Erfindung vorzugsweise unterhalb, besonders bevorzugt unmittelbar unterhalb, der Mindestfüllhöhe angeordnet ist. Die Einlassleitung, d. h. die Leitung mit der insbesondere von einer Heizungsanlage das Speicherfluid zurück in den Pufferspeicher geführt wird, befindet sich vorzugsweise im unteren Bereich des Behälters.

Besonders vorteilhaft ist es, wenn die oben im Pufferspeicher angeordnete Auslassleitung (obere Leitung) sowohl als Auslass als auch als Einlass dient, insbesondere um warmes bzw. erhitztes Speicherfluid einzubringen oder aus dem Pufferspeicher zu entnehmen. Warmes Speicherfluid, das aus der oben Leitung entnommen wird, wird vorzugsweise einer Heizungsanlage zugeführt. Es kann jedoch auch wünschenswert sein dem Pufferspeicher bereits erhitztes Speicherfluid durch die obere Leitung zuzuführen, insbesondere Speicherfluid, das extern z. B. durch überschüssige Energie erhitzt wurde.

Besonders vorteilhaft ist es ferner, wenn die unten im Pufferspeicher angeordnete Einlassleitung (untere Leitung) sowohl als Einlass als auch als Auslass dient, insbesondere um kaltes bzw. noch nicht erhitztes Speicherfluid einzubringen oder von dort aus dem Pufferspeicher zu entnehmen. Eine Entnahme von Speicherfluid durch die untere Leitung kann sich primär anbieten um das Speicherfluid extern zu erhitzen, z. B. um überschüssige Energie zu verwenden.

Erfindungsgemäß können zwei, drei, vier, fünf oder mehrere obere Leitungen und/oder untere Leitungen, vorzugsweise jeweils zur Zufuhr und zur Entnahme von Speicherfluid, vorgesehen sein.

Vorzugsweise sind sowohl die Einlassleitung als auch die Auslassleitung zentral bzw. hinsichtlich deren horizontaler Positionierung mittig in dem Pufferspeicher angeordnet. Vorzugsweise weisen die Einlassleitung und die Auslassleitung jeweils einen Einlass bzw. einen Auslass auf, der eine geeignete flächige Ausdehnung aufweist. Vorzugsweise weist zumindest der Auslass an dessen oberen Ende eine Scheibe oder Platte auf, unterhalb der die Auslassöffnungen ausgebildet sind. Die Scheibe oder Platte dient dabei dazu, dass sich die Abdeckung, insbesondere wenn diese als Folie ausgebildet ist, gegebenenfalls dort auflegen kann, ohne dass die Auslassöffnungen von der Folie verdeckt.

In einer besonders vorteilhaften Ausgestaltung kann vorgesehen sein, dass der Auslass und/oder der Einlass zwei auf Abstand zueinander angeordnete Scheiben oder Platten aufweist, zwischen denen die Auslassöffnungen respektive die Einlassöffnungen angeordnet sind.

Die Scheiben oder Platten erstrecken sich vorzugsweise im Wesentlichen parallel zu einer horizontal verlaufenden Querschnittsfläche des Pufferspeichers und weisen vorzugsweise einen Durchmesser von wenigstens 50 cm, besonders bevorzugt wenigstens 1 m, auf. Die Platte oder Scheibe ist vorzugsweise flach ausgebildet, kann jedoch auch gewölbt verlaufen. Durch diese Gestaltung weist insbesondere der im Pufferspeicher oben angeordnete Auslass eine geeignete Auflagefläche auf, auf der die Abdeckung bzw. die Folie gegebenenfalls aufliegen kann.

Von Vorteil ist es, wenn der Pufferspeicher wenigstens eine Verstrebung aufweist, welche sich in einer vorzugsweise horizontalen Querschnittsebene durch den Pufferspeicher, vorzugsweise von einer Innenwand des Pufferspeichers zu einer gegenüberliegenden Innenwand des Pufferspeichers erstreckt, wobei die Verstrebung dazu dient, dass der Auslass und/oder der Einlass gestützt wird bzw. aufliegen kann, wodurch der Auslass respektive der Einlass entsprechend stabil gehalten ist.

Die Verstrebung kann dabei sowohl oberhalb als auch unterhalb des Auslasses verlaufen. Bei einer Anordnung der Verstrebung oberhalb des Auslasses kann der Auslass entsprechend an der Verstrebung aufgehängt oder anderweitig mit dieser verbunden sein.

Die Abdeckung ist als Folie ausgebildet. Die Folie kann sich aus einer Schicht, jedoch auch aus mehreren Schichten aus unterschiedlichen Materialien zusammensetzen. Vorgesehen ist, dass wenigstens eine der Schichten gasundurchlässig ausgebildet ist. Hierfür eignet sich beispielsweise eine Aluminiumfolie in besonderer Weise. Erfindungsgemäß kann dabei vorgesehen sein, dass die Folie zwei, vorzugsweise drei oder mehr Schichten aufweist, wobei eine untere Membranschicht, eine mittlere gasundurchlässige Schicht, insbesondere eine Aluminiumfolie, und eine obere Membranschicht vorgesehen sein können.

Ein Aufbau einer Folie, die die nachfolgenden Lagen bzw. Schichten oder Kombinationen aufweist, kann sich in besonderem Maße eignen:
a) Eine Polyethylenterephthalat (PET)-Schicht sowie eine Aluminium (AI)-Schicht oder ein aus diesen Materialien bestehender Folienverbund
b) Zwei Polyethylenterephthalat (PET)-Schichten und eine dazwischen angeordnete Aluminium (AI)-Schicht
c) Eine Polyethylenterephthalat (PET)-Schicht, eine Polyesterschicht und eine dazwischen angeordnete Aluminium (AI)-Schicht
d) Zwei Polypropen (PP)-Schichten und eine dazwischen angeordnete Aluminium (AI)-Schicht.

Anstelle der Aluminium (AI)-Schicht kann jeweils auch eine Schicht aus anderen Metallen, wie insbesondere Kupfer, Silber oder Gold als Sperr- bzw. Metallschicht dienen.

Ferner kann anstelle der Aluminium (AI)-Schicht auch eine Schicht aus Lithium und/oder Magnesium, insbesondere eine Schicht aus Ethylen-Vinylalkohol-Copolymeren (EVOH) als Sperr- bzw. Metallschicht dienen.

Die jeweils gemäß den Ziffern a) bis d) aufgebauten Folien können auch in Kombination mit einem Ethylen-Propylen-Dien-Kautschuk (EPDM) aufgebaut sein bzw. eine oder mehrere Schichten aus Ethylen-Propylen-Dien-Kautschuk (EPDM) aufweisen. Dies gilt auch wenn die Aluminium (AI)-Schicht durch eine andere Sperr- bzw. Metallschicht ersetzt wird.

Die Folie kann in Ergänzung zu den vorgenannten Schichten auch noch weitere Schichten aufweisen.

Die Abdeckung, insbesondere in einer Ausgestaltung als Folie kann zudem auch über eine Isolierung verfügen. In diesem Fall kann gegebenenfalls auch auf eine Isolierung des Deckels des Pufferspeichers verzichtet werden.

In einer besonders vorteilhaften Ausgestaltung kann zudem vorgesehen sein, dass alternativ oder ergänzend zu einer Ausgestaltung der Folie mit einer Isolierung vorgesehen ist, dass eine Isolierung auf die Oberseite der Abdeckung bzw. der Folie aufgebracht wird, das heißt, dass auf der Seite, an der die Abdeckung bzw. die Folie an den Ausgleichsraum angrenzt, eine Isolierung vorhanden ist. In besonders vorteilhafter Weise kann dies dadurch realisiert werden, dass Isolationskugeln, beispielsweise Styroporkugeln, in den Ausgleichsraum eingefüllt werden, so dass diese als bewegliche Schicht auf der Abdeckung, insbesondere der Folie, aufliegen und sich mit der Folie mitbewegen können.

Grundsätzlich ist eine beliebige Schüttung oder Dämmung auf der Folie möglich.

Der Boden des Behälters bzw. des Sockels kann vorzugsweise aus Edelstahlplatten oder aus herkömmlichen Stahlplatten, die dann entsprechend korrosionsbeständig behandelt sind, beispielsweise über einen entsprechenden Anstrich verfügen, hergestellt sein.

Wie bereits dargestellt, kann der erfindungsgemäße Pufferspeicher über eine Wartungsluke, insbesondere im Deckel, verfügen. Alternativ oder ergänzend kann auch eine Wartungsluke in der Seitenwand des Pufferspeichers insbesondere im Bereich des Ausgleichsraums vorgesehen sein.

Die Erfindung betrifft schließlich auch ein Pufferspeichersystem mit einem Pufferspeicher insbesondere für den Betrieb mit Heizungswasser als Speicherfluid für eine Heizungsanlage, der die vorstehend genannten Merkmale aufweist, sowiemit optional einem Schlauchboot für eine vereinfachte Wartung und/oder einem Pumpsystem und/oder einem Rührsystem und/oder einer Behälterheizung und/oder einem Verbindungssystem zur Verbindung mit weiteren Systemkomponenten in der Umgebung des Pufferspeichers.

Weitere Merkmale und Vorteile der Erfindung ergeben sich aus der nachfolgenden Beschreibung eines Ausführungsbeispiels der Erfindung sowie aus den Unteransprüchen.

Die Erfindung ist nachfolgend unter Bezugnahme auf die beigefügten Figuren näher beschrieben. Die Figuren zeigen mehrere Merkmale der Erfindung in Kombination miteinander. Selbstverständlich vermag der Fachmann diese jedoch auch losgelöst voneinander zu betrachten und gegebenenfalls zu weiteren sinnvollen Unterkombinationen zu kombinieren, ohne dass er hierfür erfinderisch tätig werden müsste.

Es zeigen schematisch:
- Figur 1: einen erfindungsgemäßen Pufferspeicher in einer Vorderansicht;
- Figur 2: den erfindungsgemäßen Pufferspeicher der Figur 1 in teilgeschnittener Darstellung;
- Figur 3: eine optionale Ausgestaltungen des erfindungsgemäßen Pufferspeichers;
- Figur 4: einen erfindungsgemäßen Pufferspeicher in einer zweiten, leicht abgewandelten Ausführungsform in einer Schnittdarstellung;
- Figur 5: der erfindungsgemäße Pufferspeicher gemäß Figur 4 in einer zweiten Schnittdarstellung;
- Figur 6: ein vergrößerter Ausschnitt des Bereichs VI der Figur 5 in einer prinzipmäßigen Darstellung;
- Figur 7: eine Ansicht auf den Überlauf für die Erstbefüllung bzw. den Notüberlauf aus Pfeilrichtung VII der Figur 6; und
- Figur 8: eine prinzipmäßige Darstellung eines Auslasses des Pufferspeichers, insbesondere zur Speisung einer Heizungsanlage.

Die Figuren zeigen einen erfindungsgemäßen Pufferspeicher, der allgemein mit dem Bezugszeichen 10 bezeichnet ist. Dieser umfasst ein Behältergehäuse 12, das auf einem Sockel 14 steht und mit einem Deckel 16 abgeschlossen ist.

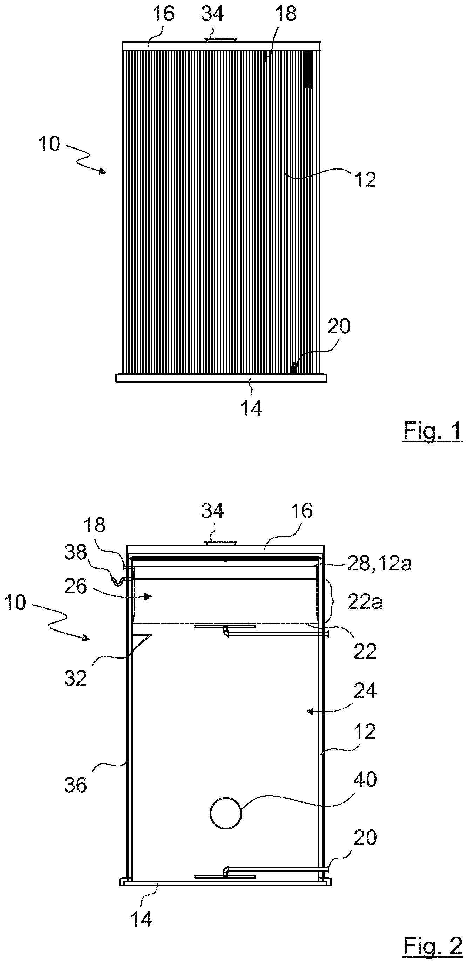

Der erfindungsgemäße Pufferspeicher 10 weist im Ausführungsbeispiel vorzugsweise eine Isolierung und eine Verkleidung auf. Es ist vorzugsweise vorgesehen, dass das Behältergehäuse 12 eine Innenhülle aufweist, die den eigentlichen Behälter ausbildet, und eine Außenverkleidung mit einer Isolierung, um die Wärme im Pufferspeicher 10 zu halten. In Fig. 2 ist die Außenverkleidung mit der Isolierung prinzipmäßig mit dem Bezugszeichen 36 versehen.

Ferner ist vorgesehen, dass auch der Boden und/oder das Dach des Pufferspeichers 10 bzw. der Sockel 14 und/oder der Deckel 16 des Pufferspeichers 10 nach dem Stand der Technik isoliert sind, dies ist jedoch in Fig. 2 nicht näher bezeichnet.

In seinem oberen Bereich weist das Behältergehäuse 12 eine Ausgleichsöffnung 18 auf, über die das Behältergehäuse 12 fluidisch mit der Umgebung verbunden ist. Schließlich sind im unteren Bereich des Behältergehäuses 12 einer oder mehrere Auslasshähne 20 vorgesehen, die ein Ablassen des Speicherfluids aus dem Inneren des Behältergehäuses 12 nach außen ermöglichen. Diese können je nach Ausgestaltung auch zum Befüllen oder für den Betrieb des Behältergehäuses 12 mit Speicherfluid genutzt werden.

Im oberen Bereich des Behältergehäuses 12 ist zudem unterhalb der Ausgleichsöffnung 18 eine gasdichte Abdeckung 22 vorgesehen. Diese ist mit ihrem Außenumfang fest mit dem Innenumfang des Behältergehäuses 12 verbunden und unterteilt das Innere des Behältergehäuses 12 in einen Raum für das Speicherfluid (Speicherraum 24) und einen Ausgleichsraum bzw. Luftraum 26.

Die Abdeckung 22 ist gasdicht mit dem Innenumfang des Behältergehäuses 12 verbunden.

Der Speicherraum 24 und der Luftraum 26 (Ausgleichsraum) sind im Ausführungsbeispiel somit gasdicht voneinander getrennt.

In der dargestellten Ausführungsform ist die gasdichte Abdeckung 22 flexibel ausgebildet und umfasst eine folienartige Struktur mit einem Kompensationsbereich 22a. Im Ausführungsbeispiel ist die gasdichte Abeckung 22 als Folie ausgebildet. Die gasdichte Abdeckung 22 ist wie ein nach oben geöffneter Sack (nach oben hin zum Luftraum 26 geöffnet) ausgebildet und im Inneren des Behältergehäuses 12 derart angeordnet, dass er mit seiner oberen Kante fest mit der Innenwand des Behältergehäuses 12 bzw. mit einer im Inneren des Behältergehäuses 12 ausgebildeten oder angeordneten Befestigungsschiene 12a verbunden ist (angedeutet durch das Bezugszeichen 28).

Hierzu kann die gasdichte Abdeckung 22 in ihrem Randbereich über die Befestigungsschiene 12a gestülpt sein und/oder an dieser angeklebt, angeschweißt angeklemmt, angeschraubt und/oder anderweitig befestigt sein.

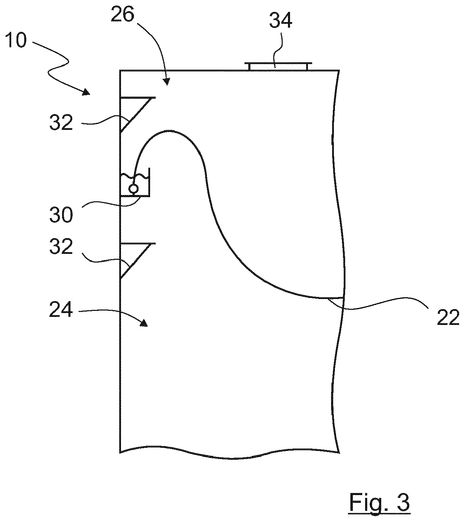

Alternativ kann die gasdichte Abdeckung 22 auch unmittelbar mit der Behälterwand verbunden sein, ohne dass hierzu eine zusätzliche Befestigungsschiene 12a oder dergleichen notwendig ist. Die Verbindung mit der Innenwand des Behältergehäuses 12 kann auch mithilfe bekannter Spannsysteme erfolgen. Eine weitere alternative Möglichkeit zur Befestigung der gasdichten Abdeckung 22, insbesondere wenn diese als Folie ausgebildet ist, ist nachfolgend anhand der Figur 3, wiederum lediglich prinzipmäßig, dargestellt.

Bei einer Volumensausdehnung des Speicherfluids im Speicherraum 24 wird der vorzugsweise sackförmige Kompensationsbereich 22a der gasdichten Abdeckung 22 in seinem unteren Bereich in Richtung zu dem Luftraum 26 gedrückt (quasi umgestülpt) bzw. angehoben und ermöglicht hierdurch die Kompensation der Volumensausdehnung im Speicherraum 24. Zugleich wird hierdurch die Luft im Luftraum 26 komprimiert bzw. über die Ausgleichsöffnung 18 an die Umgebung abgegeben. Verringert sich danach das Volumen des Speicherfluids im Speicherraum 24 wieder, so wird durch den entstehenden Unterdruck im Speicherraum 24 der Kompensationsbereich 22a des gasförmigen Abdeckung 22 wieder zurückgeformt. Der hieraus resultierende Unterdruck im Luftraum 26 führt dazu, dass Umgebungsluft über die Ausgleichsöffnung 18 in den Luftraum 26 eingezogen und damit ein unerwünschter Unterdruck im Inneren des Behältergehäuses 12 vermieden wird.

In der schematischen Darstellung der Figur 2 liegt die Unterseite der sackförmigen gasdichten Abdeckung 22 auf der Wasseroberfläche des Speicherfluids (vorzugsweise ein speziell behandeltes Wasser wie dies zur Vermeidung von Korrosion bei Heizungsanlagen verwendet wird) plan auf. Selbstverständlich kann die Auflagefläche jedoch je nach Füllstand des Speicherfluids von der dargestellten abweichen.

Wie aus Figur 2 ersichtlich ist, kann der erfindungsgemäße Pufferspeicher 10 auch über einen Notüberlauf 38 verfügen. Der Notüberlauf 38 ist vorzugsweise als Siphon ausgebildet, so dass von außen keine Luft eindringen kann. Der Notüberlauf 38 ermöglicht es, dass Speicherfluid aus dem Speicherraum 24 ablaufen kann, sollte sich der Füllstand des Speicherfluids über die maximale Wasserfüllstandshöhe ausdehnen. Der Notüberlauf 38 befindet sich daher vorzugsweise, so wie in Figur 2 dargestellt, auf einem Niveau bzw. in einer Ebene, die der maximalen Wasserfüllstandshöhe entspricht bzw. diese definiert. Die maximale Wasserfüllstandshöhe entspricht dabei vorzugsweise dem oberen Ende des Kompensationsbereichs 22a, so wie dies ebenfalls in Figur 2 dargestellt ist. Das untere Ende des Kompensationsbereichs 22a wird dabei vorzugsweise derart gewählt, wie dies bereits im allgemeinen Beschreibungsteil dargelegt wurde (Sollfüllstandshöhe des Speicherfluids bei einer Temperatur von 20 Grad Celsius bzw. gegebenenfalls auch bei 10 Grad Celsius oder definiert durch einen Bereich, der sich bei einer Temperatur zwischen 10 Grad Celsius und 20 Grad Celsius einstellt).

Durch die erfindungsgemäße gasdichte Abdeckung 22 wird eine besonders einfache und kostengünstige Lösung bereitgestellt, die einerseits einen Druckausgleich infolge einer Volumenänderung des Speicherfluids im Inneren eines Behältergehäuses 12 eines Pufferspeichers 10 kompensiert und andererseits eine unerwünschte Oxidation von metallischen Materialien des Pufferspeichers 10, des Pufferspeichersystems und/oder einer Heizungsanlage, die Teil des Pufferspeichersystems sein kann, verhindert. Auf kostenintensive Zusatzanordnungen, wie beispielsweise eine Vorrichtung zum Einspritzen eines inerten Gases in den Luftraum 26, kann vorliegend verzichtet werden.

Zur Erhöhung der Sicherheit kann jedoch vorgesehen sein, dass anstelle der Umgebungsluft in den Luftraum 26 ein inertes Gas, beispielsweise Stickstoff, eingebracht wird. Dabei kann dann vorzugsweise vorgesehen sein, dass das Gas über die Ausgleichsöffnung 18 nicht an die Außenatmosphäre abgegeben wird, sondern ein grundsätzlich bekanntes Druckausgleichssystem oder ein Ausgleichsbehälter verwendet wird. Selbstverständlich kann über die Ausgleichsöffnung 18 beispielsweise Stickstoff auch an die Außenatmosphäre abgegeben werden. In diesem Fall sind dann vorzugsweise Systeme vorgesehen, um ein Wiederbefüllen des Luftraums 26 mit Stickstoff oder einem anderen inerten Gas zu gewährleisten, wenn sich das Volumen des Speicherfluids im Speicherraum 24 wieder reduziert.

Die Figur 3 zeigt beispielhaft eine weitere vorteilhafte Möglichkeit, eine gasdichte Abdeckung 22, insbesondere eine Folie, gasdicht mit dem Behältergehäuse, insbesondere der Innenwand des Behältergehäuses, zu verbinden. Hierzu ist eine Rinne 30 vorgesehen, bei der es sich im Ausführungsbeispiel um eine mit Wasser gefüllte Wasserrinne handelt. Innerhalb der Rinne 30 sind nicht näher dargestellte Klemm-, Befestigungs- oder Spannmittel vorgesehen, um die gasdichte Abdichtung 22 bzw. die Folie zu befestigen bzw. zu spannen oder einzuklemmen. Vorgesehen sein kann auch eine andere Befestigungsart. Das in die Rinne 30 eingebrachte Wasser verhindert zuverlässig ein Eindringen eines Gases, insbesondere ein Eindringen von Luft aus dem Luftraum 26 in den Speicherraum 24.

In Figur 3 ist beispielhaft auch noch ein Laufsteg 32 oberhalb und ein Laufsteg 32 unterhalb der gasdichten Abdichtung 22 dargestellt, wodurch Wartungsarbeiten erleichtert werden. Möglich ist auch nur die Verwendung eines Laufstegs 32 ober- oder unterhalb der gasdichten Abdichtung. Die Laufstege 32 sind vorzugsweise derart positioniert, dass die Rinne 30 bzw. allgemein der Bereich an dem die gasdichte Abdichtung 22 an dem Behältergehäuse 12 angebracht ist, erreichbar ist.

In den Figuren angedeutet ist auch noch ein Wartungszugang 34, beispielsweise um ein Schlauchboot einzubringen, mit dem zu Wartungszwecken auf der gasdichten Abdichtung 22, insbesondere wenn es sich hierbei um eine Folie handelt, gefahren werden kann. Ferner kann ein Mannloch 40 (siehe Figur 2) vorgesehen sein, um in den Innenraum des Speicherraums 24 zu gelangen.

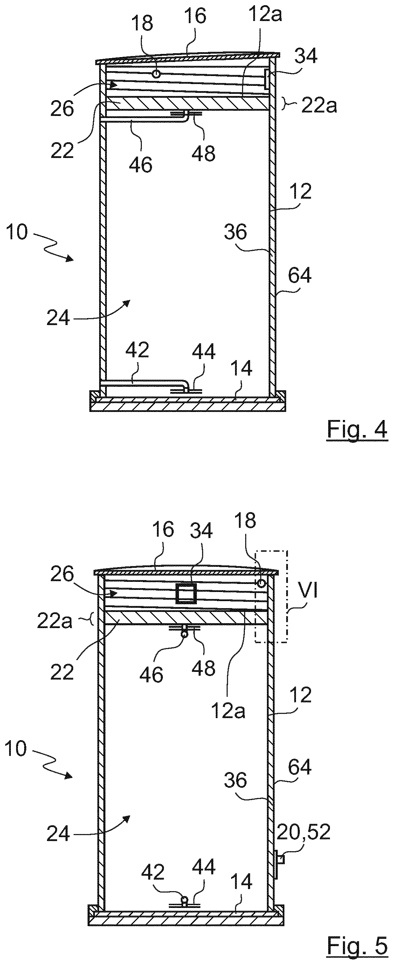

Die Figuren 4 bis 8 zeigen einen Pufferspeicher 10 in einer zweiten Ausführungsform, wobei jedoch die bezüglich des Pufferspeichers gemäß den Figuren 1 bis 3 dargestellten Merkmale auch bei dem Pufferspeicher gemäß den Figuren 4 bis 8 Verwendung finden können, und umgekehrt.

Die Figuren 4 und 5 zeigen den erfindungsgemäßen Pufferspeicher in zwei unterschiedlichen Blickrichtungen jeweils in einer Schnittdarstellung.

Der Pufferspeicher 10 weist wiederum einen Sockel 14 auf, der vorzugsweise durch Edelstahlplatten oder Metallplatten, die mit einer Korrosionsschicht versehen sind, gebildet ist. Das Behältergehäuse 12 kann dabei über eine Isolierung 36 verfügen. Dargestellt ist in den Figuren 4 und 5 ferner ebenfalls ein Deckel 16, der eine vorteilhafte Neigung gegenüber der Horizontalen aufweist. Der Wartungszugang 34 ist vorzugsweise in einer Seitenwand des Behältergehäuses 12 im Bereich des Ausgleichsraums 26 angeordnet.

Wie ferner aus den Figuren 4 und 5 ersichtlich ist, weist der Pufferspeicher 10 eine Einlassleitung 42 mit einem vorzugsweise zentralen Einlass 44 und einer Auslassleitung 46 mit einem vorzugsweise zentralen Auslass 48 auf. Grundsätzlich können auch mehrere Einlass- bzw. Auslassleitungen 42, 46 bzw. Einlässe 44 und Auslässe 48 vorgesehen sein.

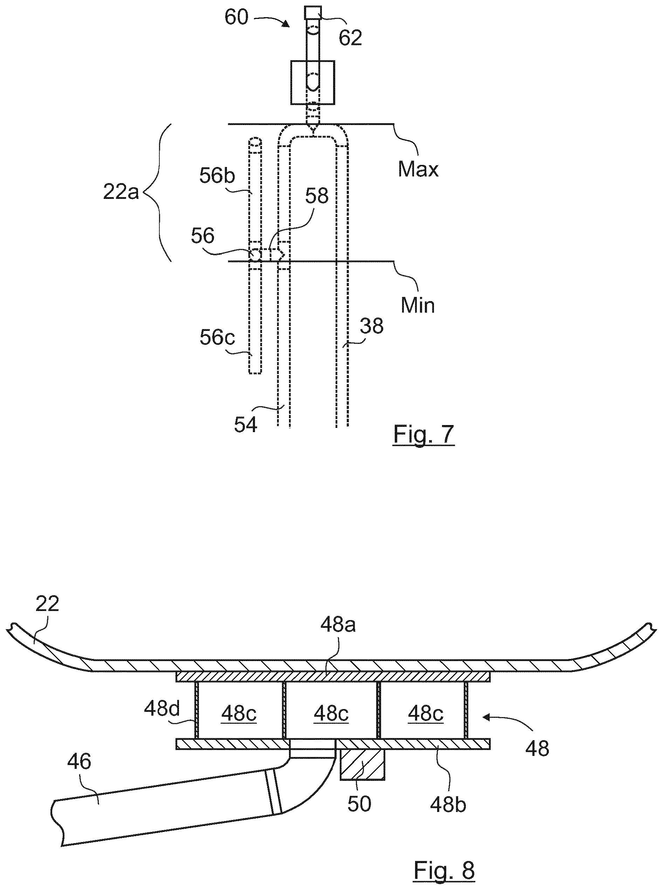

In Figur 8 ist prinzipmäßig ein Auslass 48 mit einer Auslassleitung 46 dargestellt. Der Auslass 48 und die Auslassleitung 46 dienen dazu, das in dem Pufferspeicher befindliche Speicherfluid einer Nutzung zuzuführen, insbesondere eine Heizungsanlage damit zu speisen. Der Auslass 48 weist hierzu eine vergleichsweise großflächige Erstreckung in einer horizontalen Richtung, vorzugsweise im Wesentlichen parallel zum Sockel 14, auf. Der Auslass 48 kann dabei zumindest eine obere Platte 48a aufweisen, die vorzugsweise kreisförmig gestaltet ist. Auf der oberen Platte 48a kann, wie prinzipmäßig dargestellt, die Abdeckung 22 bzw. die Folie aufliegen, wenn der Pegel des Speicherfluids entsprechend abgesunken ist. Vorzugsweise weist der Auslass 48, wie dargestellt, eine zweite Platte 48b auf, die vorzugsweise im Wesentlichen identisch bzw. spiegelbildlich zu der Platte 48a gestaltet ist. Die beiden Platten 48a, 48b verlaufen zueinander planparallel, jedoch auf Abstand zueinander, so dass zwischen den Platten 48a, 48b Auslassöffnungen 48c ausgebildet sind, die die Auslassleitung 46 speisen. Zwischen den Auslassöffnungen 48c können, um die Platten 48a, 48b auf Abstand zu halten und zur Stabilisierung, Stege 48d vorgesehen sein.

Der dargestellte Aufbau des Auslasses 48 verhindert, dass die Abdeckung 22, insbesondere in einer Ausgestaltung als Folie, den Auslass 48 bzw. die Auslassöffnungen 48c verschließt, wenn die Folie entsprechend weit abgesunken ist.

Es kann vorgesehen sein, dass der Einlass 44 entsprechend gestaltet ist.

In Figur 8 ist ferner prinzipmäßig eine Strebe 50 dargestellt, die an ihren Enden jeweils an, vorzugsweise gegenüberliegenden, Innenwänden des Behältergehäuses 12 befestigt ist und die dazu dient, den Auslass 48 zu tragen bzw. zu stabilisieren.

Der Auslass 48 weist vorzugsweise eine Erstreckung in horizontaler Richtung mit einem Durchmesser von wenigstens 1 m auf.

Wie aus der Darstellung der Figuren 4 und 5 ersichtlich ist, kann der Pufferspeicher 10 vorzugsweise eine Behälterwand aus einem Metallband aufweisen, welches sich von einem unteren Ende des Behälters umlaufend mit einer Steigung bis zum Deckel 16 erstreckt. Ein derartiger Aufbau ist grundsätzlich bekannt.

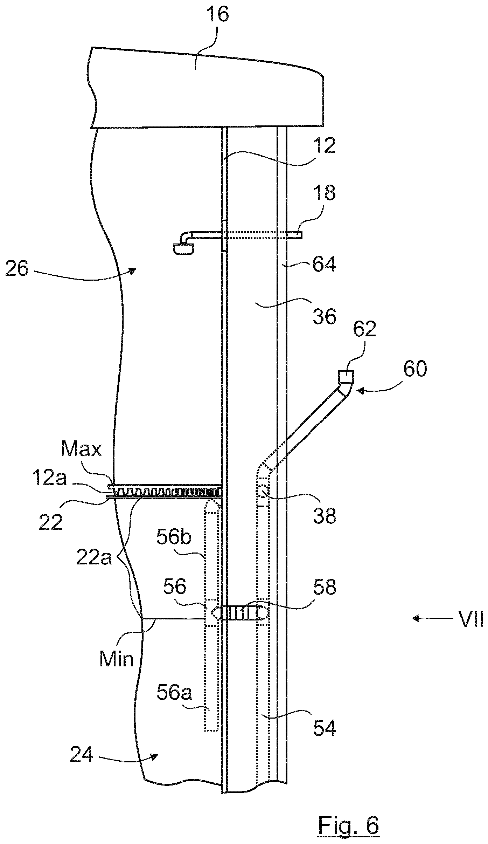

In den Figuren 4 und 5 ist auch der Kompensationsbereich 22a dargestellt. Die untere Linie des Kompensationsbereichs 22a bezeichnet dabei eine Mindestfüllhöhe (Min) und die obere Linie des Kompensationsbereichs 22a die Maximalfüllhöhe (Max), wie nachfolgend gemäß den Figuren 6 und 7 noch näher dargestellt ist.

Im Ausführungsbeispiel gemäß den Figuren 4 bis 7 ist vorgesehen, dass die Abdeckung 22 in der Ausbildung als Folie mittels einer Befestigungsschiene 12a oder dergleichen im Bereich der Maximalfüllhöhe gasdicht mit dem Behältergehäuse 12 verbunden ist. Die Folie 22 hängt somit, wenn der Speicherraum 24 unterhalb der Maximalfüllhöhe mit dem Speicherfluid befüllt ist, nach unten durch bzw. schwimmt entsprechend auf dem Speicherfluid.

Grundsätzlich ist es jedoch auch möglich, die Folie 22 tiefer als in den Figuren 4 bis 6 dargestellt an dem Behältergehäuse 12 zu befestigen. Die Folie 22 kann in der Höhe des Kompensationsbereichs 22a, d. h. zwischen der Mindestfüllhöhe und der Maximalfüllhöhe, befestigt sein. Hier sind jedoch auch andere Gestaltungen möglich.

In Figur 5 ist prinzipmäßig eine Einfüllöffnung 20, 52 dargestellt, die unter anderem dazu dienen kann, den Pufferspeicher 10 mit dem Speicherfluid zu befüllen. Die Einfüllöffnung 52 kann, wie nachfolgend noch näher dargestellt ist, jedoch auch derart gestaltet sein, dass diese mit einem Überlauf 54 für die Erstbefüllung bzw. einem Notüberlauf in 38 Verbindung steht, damit Speicherfluid ablaufen kann. Vorzugsweise verfügt die Einlassöffnung 52, insbesondere in Verbindung mit dem Notüberlauf 38, in diesem Bereich über ein Siphon (nicht näher dargestellt).

Die Figuren 6 und 7 zeigen eine besonders vorteilhafte Ausgestaltung des Überlaufs 54 für die Erstbefüllung bzw. des grundsätzlich bereits bezüglich der Figur 2 erwähnten Notüberlaufs 38.

Die Erfindung ist nicht auf die nachfolgende Gestaltung beschränkt, diese eignet sich jedoch in besonderer Weise, um sowohl einen Überlauf 54 für die Erstbefüllung als auch einen Notüberlauf 38 auszubilden.

Der Überlauf 54 und der Notüberlauf 38 werden durch ein vorzugsweise doppelläufiges Rohr ausgebildet. Wie sich aus einer Zusammenschau der Figuren 6 und 7 ergibt, mündet der Überlauf für die Erstbefüllung im Bereich der Mindestfüllhöhe in den Speicherraum 24. Im Ausführungsbeispiel mündet der Überlauf 54 knapp über der Mindestfüllhöhe in ein vertikal verlaufendes Rohrstück 56, welches ein unteres Teilstück 56a und ein oberes Teilstück 56b aufweist, an denen jeweils Öffnungen ausgebildet sind. Das untere Teilstück 56a des vertikal verlaufenden Rohrstücks 56 befindet sich deutlich unterhalb der Mindestfüllhöhe des Speicherfluids und ist daher im Regelfall von Speicherfluid umgeben. Das obere Teilstück 56b des vertikal verlaufenden Rohrstücks 56 befindet sich im Bereich der Aufhängung der Folie 22 bzw. der Befestigungsschiene 12a. Im Ausführungsbeispiel befindet sich das obere Teilstück 56b ferner im Bereich der Maximalfüllhöhe. Das obere Teilstück 56b verläuft vorzugsweise abgewinkelt und erstreckt sich, aus den nachfolgend noch näher geschilderten Gründen, zumindest über ein Teil seiner Länge auch in horizontaler Richtung und weist dabei vorzugsweise, verteilt über den horizontalen Abschnitt, mehrere Öffnungen auf. Es kann jedoch auch vorgesehen sein, dass sich nur am Ende des horizontalen Abschnitts eine Öffnung befindet.

Bei der Erstbefüllung des Pufferspeichers bzw. allgemein bei der Befüllung des Pufferspeichers mit Speicherfluid steigt das Speicherfluid im Pufferspeicher an und erreicht das untere Ende des unteren Teilstücks 56a des Rohrstücks 56. In dem unteren Teilstück 56a steigt dann das Speicherfluid soweit an, bis ein Zugang 58, der vorzugsweise über einen Siphon verfügt, erreicht wird. Von dem Zugang 58 strömt dann das Speicherfluid in den Überlauf 54 und von dort zu einer Auslassöffnung, vorzugsweise zu einer Auslassöffnung, die mit der Einlassöffnung 52 kombiniert ist bzw. vorzugsweise zumindest räumlich benachbart zu dieser angeordnet ist.

Sobald aus dem Überlauf 54 Speicherfluid abläuft, erkennt der Bediener, dass die Mindestfüllhöhe erreicht ist und der Befüllvorgang kann beendet werden. Dabei kann dann auch der Überlauf 54 für die Erstbefüllung, zumindest in einem nicht dargestellten unteren Bereich, in dem der Auslass angeordnet ist, vorzugsweise im Bereich der Einlassöffnung 52, abgesperrt werden. Dadurch wird vermieden, dass im normalen Betrieb über den Überlauf 54 für die Erstbefüllung Speicherfluid austritt. Dies ist nicht gewünscht. Im normalen Betrieb wird sich das Speicherfluid, welches beim Einfüllen üblicherweise eine Temperatur von 10 Grad Celsius haben wird, ohnehin über den Zugang 58 hinaus ausdehnen, so dass vermieden werden sollte, dass über den Überlauf 54 Speicherfluid ausströmt.

Im Ausführungsbeispiel ist ein Notüberlauf 38 derart gestaltet, dass dieser ebenfalls mit dem Zugang 58 und somit mit dem vertikalen Rohrstück 56 verbunden ist. Ausgehend von dem Zugang 58 erstreckt sich der Notüberlauf 38 jedoch zunächst in vertikaler Richtung nach oben, und zwar so weit, dass sich das obere Ende des Notüberlaufs 38 auf Höhe der Maximalfüllhöhe befindet. Dadurch wird erreicht, dass im normalen Betrieb unterhalb der Maximalfüllhöhe über den Notüberlauf 38 kein Speicherfluid ausströmt. Erst wenn das Speicherfluid in dem Pufferspeicher 10 soweit gestiegen ist, dass die Maximalfüllhöhe erreicht wird, strömt über den Notüberlauf 38 Speicherfluid ab. Dabei ist vorgesehen, dass im Bereich einer Auslassöffnung (nicht dargestellt) des Notüberlaufs 38, insbesondere im unteren Bereich des Behältergehäuses 12, ein Siphon ausgebildet ist, so dass über den Notüberlauf 38 kein Sauerstoff eindringen kann. Gemeinsam mit dem Zugang 58, der ebenfalls vorzugsweise über ein Siphon verfügt, wird somit ein doppeltes Siphonsystem geschaffen, welches im Normalbetrieb zuverlässig das Eindringen von Sauerstoff in den Speicherraum 24 vermeidet.

Der Auslass des Notüberlaufs 38 ist vorzugsweise wiederum mit der Einlassöffnung 52 kombiniert bzw. vorzugsweise zumindest in räumlicher Nähe angeordnet.

Der im Ausführungsbeispiel dargestellte Pufferspeicher 10 weist ferner einen Notlufteinlass 60 auf. Der Notlufteinlass 60 weist dabei ein Unterdruckventil 62 auf. Der Notlufteinlass 60 dient dazu, bei einem Rohrbruch oder wenn aus Versehen zu viel Speicherfluid abgelassen wird, eine Beschädigung der Folie 22 zu vermeiden. Wenn das Speicherfluid unterhalb der Mindestfüllhöhe absinkt bzw. so weit absinkt, dass die Folie 22 nicht mehr folgen kann, würde sich im Speicherraum 24 unterhalb der Folie 22 ein Unterdruck bzw. Vakuum bilden, durch welches die Folie 22 beschädigt werden könnte. In diesem Fall ist vorgesehen, dass der Notlufteinlass 60 öffnet, wozu das Unterdruckventil 62 dienen kann. Grundsätzlich kann der Notlufteinlass 60 in verschiedenen Ausführungen realisiert werden. Die nachfolgend beschriebene Ausführung eignet sich jedoch in besonderer Weise.

Im Ausführungsbeispiel ist vorgesehen, dass der Notlufteinlass 60 zunächst in den Notüberlauf 38 mündet, welcher wiederum in Verbindung mit dem Zugang 58 steht. Der Zugang 58 ist dabei, wie beschrieben, mit dem Rohrstück 56 verbunden. Sobald das Speicherfluid soweit abgesunken ist, dass der Zugang 58 oberhalb des Speicherfluids liegt, was im Ausführungsbeispiel auch bedeutet, dass das Speicherfluid unterhalb der Mindestfüllhöhe abgesunken ist, wird bei einem weiteren Absinken aufgrund des Unterdrucks im Pufferspeicher 10 der Zugang 58, selbst wenn dieser über einen Siphon verfügt, von Flüssigkeit soweit befreit, dass eine Verbindung zu dem Notlufteinlass 60 bzw. dem Unterdruckventil 62 besteht. Bei einem Absinken des Drucks unterhalb ein definiertes Niveau öffnet das Unterdruckventil 62, so dass Luft einströmen kann, welches über den Zugang 58 in das Rohrstück 56 und von dort zu dem oberen Teilstück 56b, welches bereits freiliegt, gelangt. Von dort strömt dann Luft in den Speicherraum 24 ein. Um zu vermeiden, dass die Folie 22 das obere Teilstück 56b des Rohrstücks 56 abdeckt, verläuft dieses vorzugsweise über eine Teillänge auch in horizontaler Richtung, vorzugsweise im Bereich der Maximalfüllhöhe und weist vorzugsweise mehrere Öffnungen auf, so dass die Luft in der geeigneten Weise ausströmen kann.

Die in Figur 6 dargestellte Ausgleichsöffnung 18 führt in der vereinfachten Darstellung unmittelbar nach außen bzw. stellt eine Verbindung mit der Umgebung oder einem Druckbehälter dar. Die Ausgleichsöffnung 18 kann vorzugsweise jedoch auch über eine nicht dargestellte Leitung nach unten geführt werden und vorzugsweise in räumlicher Nähe der Einlassöffnung aus dem Pufferspeicher 10 austreten.

Im Ausführungsbeispiel ist vorzugsweise vorgesehen, dass die oben im Pufferspeicher 10 angeordnete Auslassleitung 46 bzw. der Auslass 48 sowohl zur Zufuhr als auch zur Entnahme von Speicherfluid dient, insbesondere um warmes bzw. erhitztes Speicherfluid einzubringen oder aus dem Pufferspeicher 10 zu entnehmen.

Die Auslassleitung 46 bzw. der Auslass 48 können insbesondere dazu dienen extern erhitztes Speicherfluid zuzuführen und/oder warmes Speicherfluid aus dem Pufferspeicher zu entnehmen um damit eine Heizungsanlage zu versorgen.

Im Ausführungsbeispiel kann (nicht dargestellt) vorgesehen sein, dass der Pufferspeicher 10 zwei, drei, vier, fünf oder mehrere Auslassleitungen 46 und/oder Auslässe 48, insbesondere mehrere obere Platten 48a und untere Platten 48b aufweist, auf denen die Abdeckung 22 aufliegen kann.

Im Ausführungsbeispiel ist vorzugsweise vorgesehen, dass die unten im Pufferspeicher 10 angeordnete Einlassleitung 42 bzw. der Einlass 44 sowohl zur Zufuhr als auch zur Entnahme von Speicherfluid dient, insbesondere um kaltes bzw. nicht erhitztes Speicherfluid einzubringen oder Speicherfluid aus dem Pufferspeicher 10 zu entnehmen.

Die Einlassleitung 42 bzw. der Einlass 44 können insbesondere dazu dienen Speicherfluid zuzuführen und/oder Speicherfluid aus dem Pufferspeicher zu entnehmen um dieses extern, insbesondere durch überschüssige Energie, zu erhitzen.

Die Folie 22 kann grundsätzlich einen geeigneten Aufbau aufweisen. Es ist im Ausführungsbeispiel vorgesehen, dass die Folie 22 wenigstens zwei Schichten aufweist, vorzugsweise drei Schichten, wobei die zweite, vorzugsweise die mittlere Schicht, gasundurchlässig ist, beispielsweise durch eine Aluminiumfolie gebildet wird.

In nicht näher dargestellter Weise kann die Folie 22 auch über eine Isolierung verfügen. Ferner kann alternativ oder ergänzend in nicht dargestellter Weise vorgesehen sein, dass auf die Oberfläche der Folie 22, die dem Ausgleichsraum 26 zugewandt ist, eine Isolierung, vorzugsweise in Kugelform, vorzugsweise Styroporkugeln, aufgebracht wird.

## Patentansprüche

1. Pufferspeicher (10), umfassend:
ein geschlossenes Behältergehäuse (12) zur Aufnahme eines Speicherfluides, insbesondere von Wasser, wobei das Behältergehäuse (12) wenigstens eine Einlassöffnung zum Befüllen des Behältergehäuses (12) mit dem Speicherfluid aufweist, sowie wenigstens eine Ausgleichsöffnung (18), die das Behältergehäuse (12) fluidisch mit der Umgebung verbindet und einen fluidischen Ausgleich mit der Umgebung ermöglicht, sowie eine gasdichte Abdeckung (22) im Inneren des Behältergehäuses (12), die das Speicherfluid zuverlässig vor der Vermischung mit anderen Fluiden, beispielsweise der Umgebungsluft, zu schützen vermag,
**dadurch gekennzeichnet, dass**
die gasdichte Abdeckung (22) als Folie ausgebildet ist, die wenigstens teilweise auf dem Speicherfluid, insbesondere dem Wasser, schwimmt.

2. Pufferspeicher (10) nach Anspruch 1,
wobei die gasdichte Abdeckung (22) zumindest abschnittsweise flexibel ausgebildet ist.

3. Pufferspeicher (10) nach einem der vorhergehenden Ansprüche,
wobei die gasdichte Abdeckung (22) zumindest einen Kompensationsbereich (22a) aufweist, der eine Volumensänderung des Speicherfluids auszugleichen vermag, indem sich die gasdichte Abdeckung (22) im Kompensationsbereich (22a) auszudehnen oder zu kontrahieren vermag bzw. durch das Speicherfluid anhebbar oder absenkbar ist.

4. Pufferspeicher (10) nach einem der vorhergehenden Ansprüche,
wobei die gasdichte Abdeckung (22) im Bereich ihres Außenumfangs fest mit dem Behältergehäuse (12) verbunden ist, beispielsweise geklemmt, geklebt, geschweißt oder verschraubt ist.

5. Pufferspeicher (10) nach einem der vorhergehenden Ansprüche,
wobei die gasdichte Abdeckung (22) zumindest abschnittsweise doppelwandig und/oder mehrlagig ausgebildet ist.

6. Pufferspeicher (10) nach einem der vorhergehenden Ansprüche,
wobei die gasdichte Abdeckung (22) zumindest abschnittsweise eine geringere Dichte als das Speicherfluid aufweist.

7. Pufferspeicher (10) nach einem der Ansprüche 1 bis 6,
**dadurch gekennzeichnet, dass**
die Folie (22) derart in dem Behältergehäuse (12) befestigt ist, dass die Folie (22) im Kompensationsbereich (22a) einer Volumenänderung des Speicherfluids folgen kann, insbesondere auf dem Speicherfluid schwimmend anhebbar und absenkbar ist.

8. Pufferspeicher (10) nach Anspruch 7,
**dadurch gekennzeichnet, dass**
der Kompensationsbereich (22a) derart gewählt wird, dass bei einer Befüllung des Behälters mit Speicherfluid mit einer Temperatur von 20 Grad Celsius die Sollfüllhöhe im Behältergehäuse (12) ein unteres Ende des Kompensationsbereichs (22a) definiert, während sich ein oberes Ende des Kompensationsbereichs (22a) durch eine Füllstandshöhe des Speicherfluids im Behältergehäuse (12) definiert ist, die sich ergibt, wenn das Speicherfluid auf eine Temperatur von 95 Grad Celsius aufgeheizt wird.

9. Pufferspeicher (10) nach einem der Ansprüche 4 bis 8,
**dadurch gekennzeichnet, dass**
der Kompensationsbereich (22a) derart gewählt ist, dass Volumenänderungen des Speicherfluids bis zu 20 % des Speichervolumens des Pufferspeichers (10) ausgleichbar sind.

10. Pufferspeicher (10) nach einem der vorhergehenden Ansprüche,
**dadurch gekennzeichnet, dass**
die gasdichte Abdeckung (22) eine Folie aus Ethylen-Propylen-Dien-Terpolymer (EPDM) ist oder Ethylen-Propylen-Dien-Terpolymer (EPDM) aufweist.

11. Pufferspeicher (10) nach einem der Ansprüche 1 bis 10,
**dadurch gekennzeichnet, dass**
die Folie (22) eine Stärke von 0,5 bis 5 mm, vorzugsweise 1 mm bis 4 mm, besonders bevorzugt 1,5 bis 3 mm und ganz besonders bevorzugt 2 mm +/- 0,2 mm, aufweist.

12. Pufferspeicher (10) nach einem der vorhergehenden Ansprüche,
wobei das Behältergehäuse (12) an seinem Innenumfang eine Befestigungsschiene (12a), insbesondere eine Klemmschiene, zur gasdichten Befestigung der gasdichten Abdeckung (22) aufweisen kann.

13. Pufferspeichersystem mit einem Pufferspeicher (10) insbesondere für den Betrieb mit Heizungswasser als Speicherfluid für eine Heizungsanlage nach einem der vorhergehenden Ansprüche sowie optional einem Schlauchboot für eine vereinfachte Wartung und/oder einem Pumpsystem und/oder einem Rührsystem und/oder einer Behälterheizung und/oder einem Verbindungssystem zur Verbindung mit weiteren Systemkomponenten in der Umgebung des Pufferspeichers (10).

## Claims

1. A buffer store (10), comprising:
a closed vessel housing (12) to hold a storage fluid, especially water, wherein the vessel housing (12) has at least one inlet opening for filling the vessel housing (12) with the storage fluid, and at least one equalization opening (18), which connects the vessel housing (12) fluidically to the surroundings and makes possible a fluidic equalization with the surroundings, as well as a gas-tight cover (22) in the interior of the vessel housing (12), which is capable of reliably protecting the storage fluid against mixing with other fluids, such as the ambient air,
**characterized in that**
the gas-tight cover (22) is formed as a film which floats at least for a portion on the storage fluid, especially the water.

2. The buffer store (10) as claimed in claim 1,
wherein the gas-tight cover (22) is flexible at least for a portion.

3. The buffer store (10) as claimed in one of the preceding claims,
wherein the gas-tight cover (22) has at least one compensation area (22a), which can compensate for a change in volume of the storage fluid in that the gas-tight cover (22) in the compensation area (22a) can be expanded or contracted or can be raised or lowered by the storage fluid.

4. The buffer store (10) as claimed in one of the preceding claims,
wherein the gas-tight cover (22) is firmly joined to the vessel housing (12) in the area of its outer circumference, for example, being clamped, glued, welded or screwed on.

5. The buffer store (10) as claimed in one of the preceding claims,
wherein the gas-tight cover (22) is double-walled and/or multilayered at least for a portion.

6. The buffer store (10) as claimed in one of the preceding claims,
wherein the gas-tight cover (22) at least for a portion has a lower density than the storage fluid.

7. The buffer store (10) as claimed in one of claims 1 to 6,
**characterized in that**
the film (22) is secured in the vessel housing (12) in such a way that the film (22) can follow a change in volume of the storage fluid in the compensation area (22a), in particular it can be raised and lowered by floating on the storage fluid.

8. The buffer store (10) as claimed in claim 7,
**characterized in that**
the compensation area (22a) is chosen such that, when the vessel is filled with storage fluid having a temperature of 20 degrees Celsius, the nominal filling height in the vessel housing (12) defines a lower end of the compensation area (22a), while an upper end of the compensation area (22a) is defined by a fill level of the storage fluid in the vessel housing (12) that is produced when the storage fluid is heated to a temperature of 95 degrees Celsius.

9. The buffer store (10) as claimed in one of claims 4 to 8,
**characterized in that**
the compensation area (22a) is chosen such that volume changes of the storage fluid can be equalized up to 20% of the storage volume of the buffer store (10).

10. The buffer store (10) as claimed in one of the preceding claims, **characterized in that**
the gas-tight cover (22) is a film made of ethylene-propylene-diene terpolymer (EPDM) or comprises an ethylene-propylene-diene terpolymer (EPDM).

11. The buffer store (10) as claimed in one of claims 1 to 10,
**characterized in that**
the film (22) has a thickness of 0.5 to 5 mm, preferably 1 mm to 4 mm, especially preferably 1.5 to 3 mm and most especially preferably 2 mm +/- 0.2 mm.

12. The buffer store (10) as claimed in one of the preceding claims,
wherein the vessel housing (12) may have on its inner circumference a mounting rail (12a), especially a clamping rail, for the gas-tight mounting of the gas-tight cover (22).

13. A buffer store system having a buffer store (10) especially for operation with heating water as the storage fluid for a heating plant as claimed in one of the preceding claims and optionally a rubber boat for an easier maintenance and/or a pump system and/or a stirring system and/or a vessel heating and/or a connection system for connecting to further system components in proximity to the buffer store (10).

## Revendications

1. Réservoir d'accumulation (10), comprenant :
un corps de conteneur (12) fermé recevant un fluide d'accumulation, notamment de l'eau, le corps de conteneur (12) comportant au moins une ouverture d'entrée pour le remplissage du corps de conteneur (12) avec le fluide d'accumulation, ainsi qu'au moins une ouverture de compensation (18), reliant de manière fluidique le corps de conteneur (12) à l'environnement et permettant une compensation fluidique avec l'environnement, ainsi que
une couverture étanche aux gaz (22) à l'intérieur du corps de conteneur (12) en mesure de protéger de manière fiable le fluide d'accumulation contre le mélange avec d'autres fluides, par exemple l'air ambiant,
**caractérisé en ce que**,
la couverture étanche aux gaz (22) est réalisée sous la forme d'un film flottant au moins en partie sur le fluide d'accumulation, notamment l'eau.

2. Réservoir d'accumulation (10) selon la revendication 1,
dans lequel la couverture étanche aux gaz (22) est réalisée au moins par sections de manière flexible.

3. Réservoir d'accumulation (10) selon l'une des revendications précédentes, dans lequel la couverture étanche aux gaz (22) possède au moins une zone de compensation (22a), en mesure de compenser un changement de volume du fluide d'accumulation, la couverture étanche aux gaz (22) se dilatant ou se contractant ou étant soulevée ou abaissée par le fluide d'accumulation dans la zone d'équilibrage (22a).

4. Réservoir d'accumulation (10) selon l'une des revendications précédentes, dans lequel la couverture étanche aux gaz (22) est reliée de manière fixe au corps de conteneur (12) dans la zone de sa périphérie, par exemple pincée, collée, soudée ou vissée.

5. Réservoir d'accumulation (10) selon l'une des revendications précédentes, dans lequel la couverture étanche aux gaz (22) est réalisée au moins par sections avec une double paroi et/ou en plusieurs couches.

6. Réservoir d'accumulation (10) selon l'une des revendications précédentes, dans lequel la couverture étanche aux gaz (22) présente au moins par sections une densité inférieure à celle du fluide d'accumulation.

7. Réservoir d'accumulation (10) selon l'une des revendications 1 à 6, **caractérisé en ce que**,
le film (22) est fixé dans le corps de conteneur (12) de telle sorte que le film (22) peut suivre, dans la zone de compensation (22a), un changement de volume du fluide d'accumulation, en particulier que, flottant sur le fluide, il peut être soulevé et abaissé.

8. Réservoir d'accumulation (10) selon la revendication 7, **caractérisé en ce que**,
la zone de compensation (22a) est choisie de sorte que, lors du remplissage du conteneur avec un fluide d'accumulation à une température de 20 degrés centigrades, la hauteur de remplissage de consigne dans le corps de conteneur (12) définit une limite inférieure de la zone de compensation (22a), alors qu'une limite supérieure de la zone de compensation (22a) est définie par une hauteur de remplissage du fluide d'accumulation dans le corps de conteneur (12) obtenue lorsque le fluide d'accumulation est chauffé à une température de 95 degrés centigrades.

9. Réservoir d'accumulation (10) selon l'une des revendications 4 à 8, **caractérisé en ce que**,
la zone de compensation (22a) est choisie de sorte que des changements de volume du fluide d'accumulation atteignant 20% du volume de stockage du réservoir d'accumulation (10) puissent être compensés.

10. Réservoir d'accumulation (10) selon l'une des revendications précédentes, **caractérisé en ce que**,
la couverture étanche aux gaz (22) est un film en terpolymère d'éthylène-propylène-diène (EPDM) ou comporte un terpolymère d'éthylène-propylène-diène (EPDM).

11. Réservoir d'accumulation (10) selon l'une des revendications 1 à 10, **caractérisé en ce que**,
le film (22) a une épaisseur de 0,5 à 5 mm, de préférence de 1 mm à 4 mm, de manière particulièrement préférée de 1,5 à 3 mm et de manière tout particulièrement préférée de 2 mm +/- 0,2 mm.

12. Réservoir d'accumulation (10) selon l'une des revendications précédentes, dans lequel le corps de conteneur (12) peut présenter sur sa périphérie intérieure un rail de fixation (12a), notamment un rail de serrage, pour la fixation étanche aux gaz de la couverture étanche aux gaz (22).

13. Système de réservoir d'accumulation avec un réservoir d'accumulation (10) notamment pour une utilisation avec de l'eau de chauffage comme fluide d'accumulation pour une installation de chauffage selon l'une des revendications précédentes, ainsi qu'en option un canot pneumatique pour faciliter l'entretien et/ou un système de pompe et/ou un système d'agitateur et/ou un chauffage du conteneur et/ou un système de connexion pour le raccordement à d'autres composants du système dans l'environnement du réservoir d'accumulation (10).
